Europäisches Patentamt

European Patent Office

Office européen des brevets

(11) Publication number: **0 443 219 A1**

## (12) EUROPEAN PATENT APPLICATION

(21) Application number: 90203513.8

(22) Date of filing: 28.12.90

(51) Int. Cl.⁵: **A21D 10/04**

(30) Priority: 19.02.90 NL 9000394

(43) Date of publication of application:
28.08.91 Bulletin 91/35

(84) Designated Contracting States:
AT BE CH DE DK ES FR GB GR IT LI LU NL SE

(71) Applicant: **JOYVALLE C.V.**
**'s Gravenmolenstraat 10**
**B-1850 Grimbergen(BE)**

(72) Inventor: **Ghysbrechts, Ronald, Pierre, Luc**
**Onderdale 6**
**9910 Knesselare(BE)**
Inventor: **Moerenhout, Hilde, Germaine**
**Wanzelesteenweg 23**
**9260 Serskamp(BE)**

(74) Representative: **Kooy, Leendert Willem et al**
**OCTROOIBUREAU VRIESENDORP & GAADE**
**P.O. Box 266**
**NL-2501 AW The Hague(NL)**

(54) **A process for preparing a ready-to-bake dough which is storage stable at room temperature.**

(57) The present invention relates to a process for preparing a long shelf life (at ambient temperature) ready-to-bake dough, the process comprising
   a) preparing an aqueous phase by mixing milk, eggs, water and optionally further water-compatible ingredients, adjusting the pH of the aqueous phase to a value of 7.0 to 9.5, and sterilizing the aqueous phase,
   b) preparing an oil phase by mixing flour, oil and optionally further oil-compatible ingredients, and sterilizing the oil phase,
   c) mixing the separately sterilized aqueous phase and oil phase aseptically to an emulsion at a temperature below the gelatinisation temperature of the flour type used, and
   d) filling the obtained emulsion aseptically.

EP 0 443 219 A1

The present invention relates to a process for preparing a long shelf life ready-to-bake dough, in particular a liquid or pourable dough such as pancake batter.

A dough is a mixture of flour, milk and eggs as basic ingredients which is converted into a solid matrix of coagulated proteins and gelified starch by applying a specific heat treatment carried out by the consumer. Depending on the nature and the proportion of the concentrations of the basic ingredients and the various supplementary ingredients such as sugar, fats, flavours, emulsifiers, stabilizers and the like, an assortment of doughs can be obtained which leads to an assortment of pastries by a specific heating process.

Doughs are traditionally prepared by mixing the ingredients immediately before (except for an optional rise process) baking and these products have a limited storage stability even under cooled conditions.

From Dutch patent specification 161,039 a process is known for preparing a packed ready-to-bake cake mixture, the process comprising
a) preparing an aqueous phase having a water activity of up to 0.85 by mixing eggs, sugar, optionally a polyvalent alcohol and optionally water, surfactant and thickener, and pasteurizing the mixture without denaturating the proteins, b) preparing a fat phase by melting fat and adding flour and pasteurizing the mixture without denaturating the proteins, c) foaming the aqueous phase, d) cooling the fat phase and mixing it with the aqueous phase, and e) filling the resulted cake batter aseptically.

The thus prepared batter can be preserved several weeks at refrigerator temperatures.

When one wishes to prepare a ready-to-bake dough which has a prolonged storage stability than that of the above-mentioned Dutch patent specification, one will have to use a sterilization treatment. Then the problem arises that the proteins of the eggs (especially those of the egg white) will coagulate during sterilization. In European patent application 324,291 this problem is solved by substituting egg white by e.g. a milk retentate. Thus, in this patent application a process is described for preparing a long shelf life ready-to-bake dough, in particular pancake batter, said process comprising preparing on the one hand a starch phase by mixing flour and oil, and on the other hand an aqueous phase by mixing proteins, water, salt and fat; sterilizing the two phases separately; mixing the sterilized phases and filling the obtained mixture aseptically. For the proteins of the aqueous phase a milk retentate obtained by ultrafiltration of milk is used. The proteins of the milk retentate coagulate only during the heat treatment carried out by the consumer, and not during the above-mentioned sterilization treatment. The thus prepared dough can be preserved for several months at ambient temperature.

As mentioned above, the aqueous phase in the process of European application 324,291 does not contain egg white. The aqueous phase can indeed contain egg yolk as fat substance. The egg yolk imparts a mixture which, as far as colour and taste is concerned, is more similar to the composition of domestically prepared dough. Moreover the egg yolk promotes the homogeneity of the final product.

It would be particularly advantageous when whole (fresh) eggs could be applied in the preparation of long shelf life dough. Then substitution by functionally equivalent ingredients and separate addition of egg yolk is no longer necessary. Not substituting eggs thus makes additional processes (ultrafiltration and the like), which increases the complexity and the cost of the production, superfluous. Moreover, the obtained long shelf life ready-to-bake dough would match better with the composition and intrinsic quality of domestically prepared dough.

In French patent application 2,609,601, relating to a process for the manufacture of a long shelf life dessert on the basis of milk and eggs, a milk-egg-mixture is sterilized.

The mixture of milk and concentrated eggs (obtained by ultrafiltration or evaporation) can endure a sterilization of several seconds at temperatures above 100°C. The steam injection and rapid cooling by applying vacuum prohibits prolonged cooking of the albumine.

Upon applying the process described in French patent application 2,609,601, coagulation of the albumine will take place when heating, however, upon further cooling and homogenization the formed aggregates will be reduced and finally a homogeneous product will be obtained.

Said process only permits short production times since the apparatus will be clogged seriously by the coagulated albumine. Moreover, the homogeneous final product contains highly damaged albumine, which is objectionable for the aqueous phase to be used in the preparation of a long shelf life ready-to-bake dough.

This invention provides a process for preparing a long shelf life ready-to-bake dough, the process comprising

    a) preparing an aqueous phase by mixing water-compatible ingredients and water, and sterilizing the aqueous phase,

    b) preparing an oil phase by mixing flour, oil and optionally further oil-compatible ingredients, and sterilizing the oil phase,

    c) mixing the separately sterilized aqueous phase and oil phase aseptically to an emulsion at a temperature below the gelatinisation temperature of the flour type used, and

d) filling the obtained emulsion aseptically, characterized in that the process comprises preparing the aqueous phase by mixing milk, eggs, water and optionally further water-compatible ingredients, and adjusting the pH of the aqueous phase to a value of 7.0 to 9.5 before sterilizing the aqueous phase.

The ready-to-bake dough obtained according to the process of the invention contains all basic ingredients, including eggs, for an assortment of pastries. The dough contains in any case an amount of thermocoagulatable proteins and ungelified starch which forms the solid matrix of the pastry by coagulation and gelatinisation, respectively when heat treated by the consumer.

The product can be preserved at room temperature. The storage stability of the unopened package is at least 12 weeks. When the package is opened it can be preserved for at least four days under atmospheric conditions at 5 to 7° C. When the dough is baked it results in a product of excellent quality.

The processability of whole eggs in the aqueous phase is surprisingly effected by adjusting the pH. The pH of the aqueous phase without eggs is normally approximately 6.5. The pH of the aqueous phase increases a little by adding eggs. By adjusting the pH at 7.0 to 9.5 one prevents that the egg white coagulates during the sterilization. The pH can be increased by adding any base suitable for food-stuffs, such as certain edible salts, e.g. potassium and sodium hydrogencarbonate, potassium and sodium orthophosphates, diphosphates, triphosphates and polyphosphates. The edible base can be added as a solid substance or as a solution. It is preferred to add sodium hydrogencarbonate in powder form. It is preferred to adjust the pH of the aqueous phase to a value of 7.5 to 8.5, more preferably about 8.0.

The term "phase" should be understood in the broadest sense comprising a certain mass or amount of one or more ingredients together in a homogeneous or not-homogeneous mixture. Said mass or amount is considered as unity in the production. Synonyms for "phase" in the context of this application are e.g. composition, mixture, partial stream, etc.

The aqueous phase contains all water compatible ingredients such as e.g. milk, eggs, sugar, flavours, stabilizers, etc.

The oil phase contains all oil-compatible ingredients, such as e.g. flour, stabilizers, shortenings, etc.

The aqueous phase may contain up to 35% by weight of eggs, and preferably contains 15 to 25% by weight of eggs.

Depending on the product to be prepared the aqueous phase contains 45 to 65% by weight of milk, 5 to 35% by weight of eggs, 0 to 25% by weight of water, 0 to 15% by weight of sugar, 0 to 5% by weight of stabilizers, 0 to 1% by weight of flavour and 0 to 5% by weight of other usual additives.

The preparation of the aqueous phase consists of mixing the above-mentioned ingredients. Then the pH is adjusted as described above.

The oil phase contains 35 to 80% by weight of flour, 35 to 65% by weight of oil, 0 to 5% by weight of emulsifiers, 0 to 5% by weight of stabilizers and 0 to 5% by weight of other usual additives.

The preparation of the oil phase consists of mixing the above-mentioned ingredients. Some ingredients are melted separately and are dispersed in a part of the oil before admixing with the complete oil phase.

The aqueous phase usually undergoes no pretreatment, the oil phase on the other hand is optionally heated to approximately 50° C under stirring slowly to remove the air.

The aqueous phase and the oil phase can be sterilized in a usual manner, for example by means of thermal or physical methods. Preferably the aqueous phase and the oil phase are thermally sterilized. Thus, the aqueous phase can be sterilized by a direct-steam injection at 130 to 150° C for 5 to 40 seconds or equivalent with the proviso that the aqueous phase is not subjected to degradation. The oil phase has to be sterilized in a water-free medium, e.g. by indirect sterilization with a scraped surface heat exchanger at 140 to 180° C for 2 to 15 minutes or equivalent with the proviso that the oil phase is not subjected to degradation. Beside these specific thermal preservation methods, which are based on the killing effect of heat, there are of course many variations which can be applied as well to produce a sterile product. The variations are on the one hand other thermal methods, e.g. microwave technology etc., and on the other hand physical methods, e.g. irradiation, UV, ionisation, ultrasonic treatment, gassing, etc.

The separately sterilized aqueous phase and oil phase are aseptically mixed without substantial gelatinisation of the starch at a temperature below the gelatinisation temperature of the flour type used. The ratio of the oil phase and the aqueous phase determines the use of the final mixture. The aqueous phase and oil phase are usually mixed in a weight ratio of 85:15 to 15:85. A ratio of aqueous phase/oil phase of 65:35 to 85:15 results into a fluid dough, such as a pancake batter, whereas a ratio of 20:80 results into a paste-like pie shell dough. The viscosity of the dough obtained according to the invention may vary in accordance with the desired final product, such as e.g. waffles, fritters, cakes, pie shells and the like.

The oil phase is emulsified in the aqueous phase by means of an emulsifying device, for example a high shear mixer in the aseptic tank, to yield a more or less homogeneous distribution of the phases without necessarily resulting into a strictly physically stable product.

The obtained emulsion is filled from the aseptic tank by means of an aseptic filling machine in aseptic packages.

The process according to the invention may be carried out batchwise as well as continuously.

In this way a sterile final product is obtained, particularly a product which neither contains pathogenic germs nor other germs which may develop when the product is stored and which may cause deterioration.

The proportion of the concentrations of the various ingredients are such that a dough is obtained which, when domestically used (which normally includes a heat treatment), results into a solid matrix by the coagulation of proteins, gelatinisation of starch and evaporation of a part of the water. The solid matrix is a specific pastry in accordance with the accents and proportion of the concentrations of the ingredients in the dough and the heating method applied by the consumer. The long shelf life ready-to-bake dough according to the invention is suitable to prepare an assortment of pastries having a good taste, texture and appearance, properties which are very similar to those of pastries prepared domestically.

Example

Preparation of pancake batter

For preparing the aqueous phase 353 kg of fresh whole milk is mixed with 108 kg of demineralized water, 128 kg of fresh broken whole eggs, 62 kg of crystal sugar and 650 g of sodium hydrogencarbonate in a preparation-tank provided with turbo-mixer. The pH-value is controlled and, if necessary, adjusted to pH 7.8 to 8.2 with sodium hydrogencarbonate.

The oil phase is prepared from 182 kg of wheat flour, pastry flour type, and 162 kg of vegetable oil, namely sunflower oil which is resistant to high temperatures for a prolonged period of time. 50 kg of oil is heated to 70-80°C in order to melt and disperse 4 kg of emulsifier Lecidan B 953 (Grindsted product). The resulting 54 kg is subsequently added to the 112 kg of the remaining oil. The flour is added to the oil while stirring and finally processed to a homogeneous mass by means of a high shear mixer in a preparation-tank provided with a hot water jacket. Herein the prepared oil phase is subjected to a pretreatment, namely a heating to 50°C and slow stirring for 1 hour to remove the air.

The aqueous phase is continuously sterilized by a direct UHT-treatment: 142°C - 5 seconds, cooled to 25-30°C, subsequently pumped into the aseptic processing-tank and stored for a short period of time.

The oil phase is continously sterilized by an indirect heat treatment: 160°C - 10 minutes and cooled to 25-30°C in two scraped surface heat exchangers after been cleared from water by previously sterilizing with pure oil.

The oil phase is then dosed in the aseptic processing-tank to accomplish a ratio of 65/35 between aqueous phase and oil phase.

Then the oil phase is aseptically emulsified in the aqueous phase by means of a high shear mixer (15 minutes - 3000 rpm) in the aseptic processing-tank.

The finished mixture is subsequently aseptically filled out on an aseptic filling machine.

After storage of up to 12 weeks at room temperature, this mix produces a series of pancakes of high quality by means of a classical domestic baking process.

## Claims

1. A process for preparing a long shelf life ready-to-bake dough, the process comprising

   a) preparing an aqueous phase by mixing water-compatible ingredients and water, and sterilizing the aqueous phase,

   b) preparing an oil phase by mixing flour, oil and optionally further oil-compatible ingredients, and sterilizing the oil phase,

   c) mixing the separately sterilized aqueous phase and oil phase aseptically to an emulsion at a temperature below the gelatinisation temperature of the flour type used, and

   d) filling the obtained emulsion aseptically, **characterized in that** the process comprises preparing the aqueous phase by mixing milk, eggs, water and optionally further water-compatible ingredients, and adjusting the pH of the aqueous phase to a value of 7.0 to 9.5 before sterilizing the aqueous phase.

2. A process according to claim 1, **characterized in that** the pH of the aqueous phase is adjusted to a value of 7.5 to 8.5.

3. A process according to claim 1 or 2, **characterized in that** the pH is adjusted in the defined range by addition of sodium hydrogencarbonate.

4. A process according to one of the preceding claims, **characterized in that** the aqueous phase contains up to 35% by weight of eggs.

5. A process according to claim 4, **characterized in that** the aqueous phase contains 15 to 25% by weight of eggs.

6. A process according to one of the preceding claims, **characterized in that** the aqueous phase consists of 45 to 65% by weight of milk, 5 to 35% by weight of eggs, 0 to 25% by weight of water, 0 to 15% by weight of sugar, 0 to 5% by weight of stabilizers, 0 to 1% by weight of flavour and 0 to 5% by weight of other usual additives.

7. A process according to one of the preceding claims, **characterized in that** the oil phase consists of 35 to 80% by weight of flour, 35 to 65% by weight of oil, 0 to 5% by weight of emulsifiers, 0 to 5% by weight of stabilizers and 0 to 5% by weight of other usual additives.

8. A process according to one of the preceding claims, **characterized in that** the aqueous phase and the oil phase are mixed in a weight ratio of 65:35 to 85:15.

9. A process according to one of the preceding claims, **characterized in that** the aqueous phase is sterilized by a direct steam injection at 130 to 150°C for 5 to 40 seconds, and the oil phase is sterilized in a water-free medium by indirect sterilization by a scraped surface heat exchanger at 140 to 180°C for 2 to 15 minutes.

European
Patent Office

**EUROPEAN SEARCH
REPORT**

Application Number

**EP 90 20 3513**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | EP-A-0 324 291   (CONFISERIE CHOCOLATERIE PATIN) <br> * Claims 1-22 * | 1-9 | A 21 D 10/04 |
| Y | US-A-3 573 935   (J.C. SOURBY et al.) <br> * Claims 1-4 * | 1-9 | |
| A,D | FR-A-2 609 601   (VALMONT S.A.) <br> * Claims * | 1,9 | |
| Y | CHEMICAL ABSTRACTS, vol. 98, no. 17, April 1983, page 475, abstract 142188q, Columbus, Ohio, US; <br> & JP-A-57 61 389 (NIHON NOSAN KOGYO K.K.) 24-12-1982 <br> * Abstract * | 1-9 | |
| A | CHEMICAL ABSTRACTS, vol. 93, 1980, page 748, abstract no. 68860f, Columbus, Ohio, US; A. NIEWIAROWICZ et al.: "Application of anticoagulants during pasteurization of egg white and liquid whole eggs", <br> & ARCH. GEFLUEGELKD. 1980, 44(1), 17-21 | | |

TECHNICAL FIELDS
SEARCHED (Int. Cl.5)

A 21 D
A 23 C

The present search report has been drawn up for all claims

| Place of search | Date of completion of search | Examiner |
|---|---|---|
| The Hague | 17 April 91 | COUCKE A.O.M. |